# EUROPEAN PATENT APPLICATION

(11) **EP 4 521 293 A1**
(43) Date of publication of application: **12.03.2025**
(21) Application number: 24197191.0
(22) Date of filing: 29.08.2024
(51) Int. Cl.: G06F 40/258, G06F 40/253

(54) **INFORMATION PROCESSING APPARATUS, INFORMATION PROCESSING SYSTEM, INFORMATION PROCESSING METHOD, AND CARRIER MEDIUM**

(30) Priority: 05.09.2023 JP 2023143960
(71) Applicant: Ricoh Company, Ltd., Tokyo 143-8555 (JP)
(72) Inventor: ASABA, Naoki, Tokyo, 143-8555 (JP); KAWAMURA, Shintaro, Tokyo, 143-8555 (JP)
(74) Representative: SSM Sandmair

(57) **Abstract**

An information processing apparatus (10) includes a reference distribution acquisition unit (105), a target distribution generation unit (104), and an evaluation value calculation unit (106). The reference distribution acquisition unit (105) acquires a reference distribution indicating a tendency of language information that is extracted from text data. The target distribution generation unit (104) generates a target distribution related to the language information. The evaluation value calculation unit (106) calculates an evaluation value indicating a difference between the reference distribution and the target distribution.

## Description

### BACKGROUND

### Technical Field

The present disclosure relates to an information processing apparatus, an information processing system, an information processing method, and a carrier medium.

### Related Art

A technique of creating a language model using a neural network is known. In this technique, self-supervised learning is performed using only text data that is not annotated as learning data. In this case, as the amount of learning data increases, the performance of the language model is enhanced.

For example, huge text data represented by text on the Web includes many unnatural sentences that are different from sentences normally written or spoken by humans. Since the performance of the language model deteriorates when unnatural sentences are learned as learning data, cleansing processing for deleting the unnatural sentences from the learning data is effective.

For example, Japanese Unexamined Patent Application Publication No. 2008-269430 discloses a sentence evaluation system for evaluating the content of a sentence expressed by a character string. The sentence evaluation system divides a character string included in evaluation target data into a plurality of continuous morphemes, associates each morpheme with a part-of-speech, and classifies a sentence based on the appearance frequency of an attribute corresponding to a pattern of the continuous parts-of-speech and a coefficient given to each attribute.

However, in the related art, it takes a long time to evaluate unnaturalness of text data. For example, the general cleansing method needs a complicated process such as using a dedicated determination model in order to accurately detect the unnaturalness of the text data.

### SUMMARY

Embodiments of the present disclosure described herein provide a novel information processing apparatus including a reference distribution acquisition unit, a target distribution generation unit, and an evaluation value calculation unit. The reference distribution acquisition unit acquires a reference distribution indicating a tendency of language information that is extracted from text data. The target distribution generation unit generates a target distribution related to the language information. The evaluation value calculation unit calculates an evaluation value indicating a difference between the reference distribution and the target distribution.

Embodiments of the present disclosure described herein provide a novel information processing system including an information processing terminal and an information processing apparatus. The information processing terminal is operated by a user. The information processing apparatus and the information processing terminal communicates with each other via a network. The information processing apparatus includes a reference distribution acquisition unit, a target distribution generation unit, an evaluation value calculation unit, and a result output unit. The reference distribution acquisition unit acquires a reference distribution indicating a tendency of language information. The language information is extracted from text data. The target distribution generation unit generates a target distribution related to the language information. The evaluation value calculation unit calculates an evaluation value indicating a difference between the reference distribution and the target distribution. The result output unit transmits screen data for presenting an evaluation result of the text data to the information processing terminal. The information processing terminal includes a text transmission unit and a display control unit. The text transmission unit transmits the text data to the information processing apparatus. The display control unit displays a screen including the evaluation result of the text data based on the screen data received from the information processing apparatus.

Embodiments of the present disclosure described herein provide a novel information processing method executed by a computer. The method includes: acquiring a reference distribution indicating a tendency of language information, the language information being extracted from text data; generating a target distribution related to the language information; and calculating an evaluation value indicating a difference between the reference distribution and the target distribution.

Embodiments of the present disclosure described herein provide a novel carrier medium carrying computer-readable program code that causes a computer system to perform a method. The method includes: acquiring a reference distribution indicating a tendency of language information, the language information being extracted from text data; generating a target distribution related to the language information; and calculating an evaluation value indicating a difference between the reference distribution and the target distribution.

With the above-described embodiments, a processing speed in evaluating the unnaturalness of text data increases.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a block diagram illustrating the overall configuration of an information processing system according to a first embodiment of the present disclosure;
FIG. 2 is a block diagram illustrating an example of a hardware configuration of a computer;
FIG. 3 is a block diagram illustrating a functional configuration of the information processing system according to the first embodiment of the present disclosure;
FIG. 4 is a diagram illustrating an example of a reference distribution;
FIG. 5 is a diagram illustrating an example of a target distribution for natural sentences;
FIG. 6 is a diagram illustrating an example of a target distribution for unnatural sentences;
FIG. 7 is a diagram illustrating an example of a divergence for natural sentences;
FIG. 8 is a diagram illustrating an example of a divergence for unnatural sentences;
FIG. 9 is a sequence diagram illustrating an information processing method according to the first embodiment of the present disclosure;
FIG. 10 is a screen image illustrating a result screen according to the first embodiment of the present disclosure;
FIG. 11 is a block diagram illustrating a functional configuration of the information processing system according to a first modification of the first embodiment of the present disclosure;
FIG. 12 is a block diagram illustrating a functional configuration of the information processing system according to a second modification of the first embodiment of the present disclosure;
FIG. 13 is a block diagram illustrating a functional configuration of the information processing system according to a second embodiment of the present disclosure;
FIG. 14 is a sequence diagram illustrating an information processing method according to the second embodiment of the present disclosure;
FIG. 15 is a screen image illustrating a result screen according to the second embodiment of the present disclosure;
FIG. 16 is a block diagram illustrating a functional configuration of the information processing system according to a third embodiment of the present disclosure;
FIG. 17 is a sequence diagram illustrating an information processing method according to the third embodiment of the present disclosure; and
FIG. 18 is a screen image illustrating a result screen according to the third embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A description is given below of embodiments of the present disclosure with reference to the drawings. In the drawings, like reference numerals denote like elements, and redundant descriptions thereof may be omitted in the following description.

### First Embodiment

A first embodiment of the present disclosure is an information processing system for evaluating unnaturalness of text data. The information processing system according to the first embodiment has a function of outputting a score (referred to as an "unnaturalness score" in the following description) indicating unnaturalness of text data (referred to as an "evaluation target text" in the following description) to be evaluated.

In the present embodiment, the unnatural sentence is any sentence other than a natural sentence. The natural sentence is a sentence that a human being speaks or writes for normal information transmission. An example of the unnatural sentence is a text listing Japanese prefecture names such as "Hokkaido, Aomori, Akita, Iwate, Yamagata, Miyagi, Fukushima, and Okinawa." Another example of the unnatural sentence is a text in which a specific phrase is repeated, such as "Don't run away, don't run away, don't run away, don't run away." Such a sentence has a feature that the appearance frequency of a specific word or a comma is unusually high or a particle is not included.

In order to evaluate unnaturalness of text data, for example, complicated processing such as the use of a dedicated determination model is generally needed and the complicated processing takes a long processing time. An object of the present embodiment is to evaluate unnaturalness of text data at high speed.

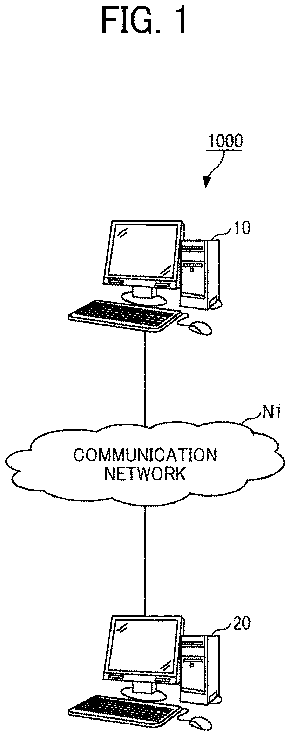

A description is given below of the overall configuration of the information processing system according to the first embodiment with reference to FIG. 1. FIG. 1 is a block diagram illustrating the overall configuration of the information processing system according to the first embodiment of the present disclosure.

As illustrated in FIG. 1, an information processing system 1000 of the first embodiment includes an information processing apparatus 10 and one or more terminal apparatuses 20. Each of the information processing apparatus 10 and the terminal apparatuses 20 is connected to a communication network N1. The communication network N1 allows the apparatuses that are connected to the communication network N1 to communicate with each other.

The communication network N1 is, for example, a wired communication network such as the Internet, a local area network (LAN), or a wide area network (WAN). Alternatively, the communication network N1 may be a wireless communication network such as a wireless LAN or a short-range wireless communication network, or a mobile communication network such as worldwide interoperability for microwave access (WiMAX), long term evolution (LTE), or 5th generation (5G) network.

The information processing apparatus 10 is an information processing apparatus that evaluates the evaluation target text. The information processing apparatus 10 receives a text set including a plurality of evaluation target texts from the terminal apparatus 20. The information processing apparatus 10 evaluates each evaluation target text included in the text set and transmits screen data for indicating the evaluation result of the evaluation target text to the terminal apparatus 20.

The terminal apparatus 20 is an information processing apparatus operated by a user of the information processing system 1000. The text set is stored in advance in the terminal apparatus 20. The terminal apparatus 20 transmits the text set to the information processing apparatus 10 in response to an operation of the user. The terminal apparatus 20 presents a result screen to the user based on the screen data received from the information processing apparatus 10.

An example of the information processing apparatus 10 and the terminal apparatus 20 is a computer. The terminal apparatus 20 is not limited to a computer as long as the terminal apparatus 20 has a communication function. Examples of the terminal apparatus 20 include, but not limited to, an output device such as an image forming apparatus (e.g., a printer, a facsimile, a multifunction peripheral/product/printer, and a scanner), a projector (PJ), an interactive whiteboard (an electronic whiteboard having mutual communication capability), and a digital signage. Examples of the terminal apparatus 20 also include, but not limited to, a head-up display (HUD), an industrial machine, an imaging device, a sound collecting device, a medical device, a networked home appliance, an automobile (connected car), a laptop computer (PC), a mobile phone, a smartphone, a tablet terminal, a game console, a personal digital assistant (PDA), a digital camera, a wearable PC, and a desktop PC.

The configuration of the information processing system 1000 of FIG. 1 is one example, and the information processing system 1000 may have another suitable system configuration. For example, the information processing apparatus 10 may be implemented by a single information processing apparatus or may be a system implemented by a plurality of information processing apparatuses. The information processing system 1000 includes various types of devices that perform at least one of input and output of electronic data, and these devices may use various services provided by the information processing apparatus 10.

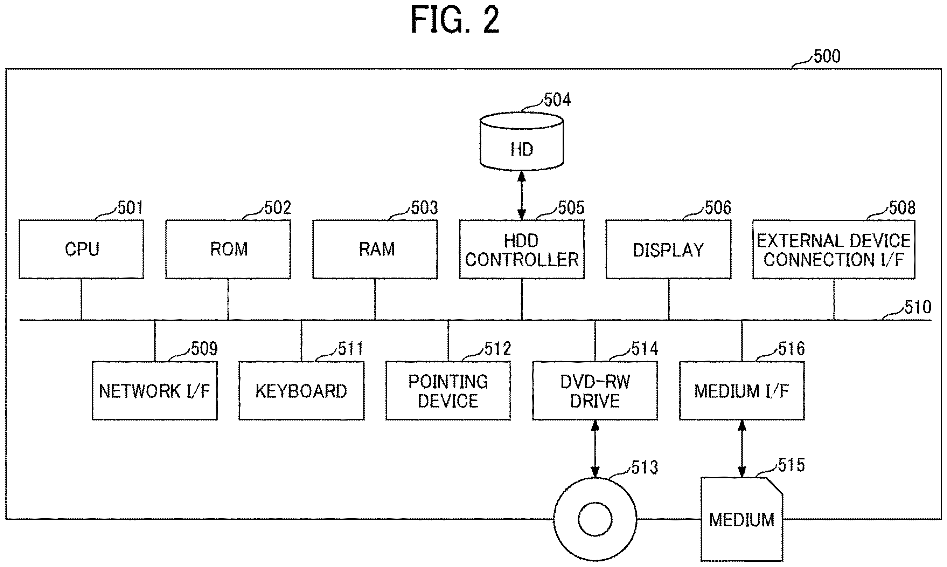

A description is given below of a hardware configuration of each apparatus included in the information processing system 1000 according to the first embodiment with reference to FIG. 2.

The information processing apparatus 10 and the terminal apparatus 20 according to the first embodiment may be implemented by, for example, computers. FIG. 2 is a block diagram illustrating an example of a hardware configuration of a computer 500.

As illustrated in FIG. 2, the computer 500 includes a central processing unit (CPU) 501, a read-only memory (ROM) 502, a random-access memory (RAM) 503, a hard disk (HD) 504, a hard disk drive (HDD) controller 505, a display 506, an external device connection interface (I/F) 508, a network I/F 509, a bus line 510, a keyboard 511, a pointing device 512, a digital versatile disk rewritable (DVD-RW) drive 514, and a medium I/F 516.

The CPU 501 controls the overall operation of the computer 500. The ROM 502 stores programs such as an initial program loader (IPL) to boot the CPU 501. The RAM 503 is used as a work area for the CPU 501. The HD 504 stores various data such as a program. The HDD controller 505 controls the reading and writing of various data from and to the HD 504 under the control of the CPU 501.

The display 506 displays various information such as a cursor, menu, window, characters, or image. The external device connection I/F 508 is an interface for connecting the computer 500 to various external devices. Examples of the external devices include, but not limited to, a universal serial bus (USB) memory and a printer. The network I/F 509 is an interface that enables data communication through the communication network N1. The bus line 510 is, for example, an address bus or a data bus, which electrically connects the components illustrated in FIG. 2, such as the CPU 501.

The keyboard 511 is one example of an input device provided with a plurality of keys for allowing the user to input characters, numerals, or various instructions. The pointing device 512 serves as an input device that allows the user to, for example, select or execute a specific instruction, select a target for processing, or move a cursor being displayed. The DVD-RW drive 514 controls the reading and writing of various kinds of data from and to a DVD-RW 513, which serves as a removable recording medium. The DVD-RW is one example of the removable storage medium. In another example, a digital versatile disk recordable (DVD-R) may be used as the removable storage medium. The medium I/F 516 controls the reading or writing (storing) of data from or to a recording medium 515 such as a flash memory.

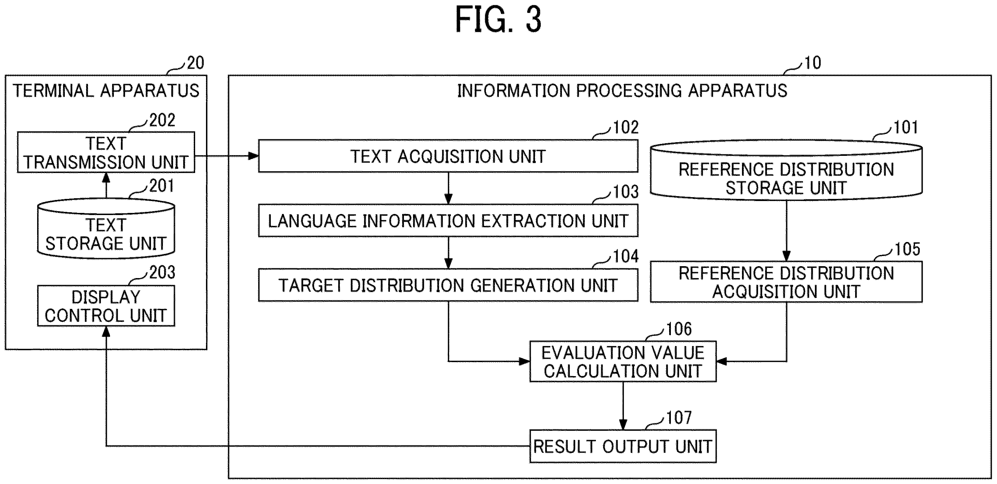

A description is given below of a functional configuration of the information processing system 1000 according to the first embodiment with reference to FIGS. 3 to 8. FIG. 3 is a block diagram illustrating the functional configuration of the information processing system 1000 according to the first embodiment of the present disclosure.

As illustrated in FIG. 3, the information processing apparatus 10 according to the first embodiment includes a reference distribution storage unit 101, a text acquisition unit 102, a language information extraction unit 103, a target distribution generation unit 104, a reference distribution acquisition unit 105, an evaluation value calculation unit 106, and a result output unit 107.

The reference distribution storage unit 101 is implemented by, for example, the HD 504 illustrated in FIG. 2. Reading or writing of the data stored in the HD 504 is performed via, for example, the HDD controller 505.

The text acquisition unit 102, the language information extraction unit 103, the target distribution generation unit 104, the reference distribution acquisition unit 105, the evaluation value calculation unit 106, and the result output unit 107 are implemented by, for example, processing executed by the CPU 501 according to a program loaded from the HD 504 to the RAM 503 illustrated in FIG. 2.

The reference distribution storage unit 101 stores a reference distribution in advance. The reference distribution is a distribution indicating a tendency of predetermined language information. For example, the reference distribution may be generated by extracting predetermined language information from a set of natural sentences collected in advance and generating a distribution of the predetermined language information.

For another example, the reference distribution may be generated by extracting predetermined language information from a set of a large number of sentences collected in advance and generating a distribution the predetermined language information. At this time, the set of sentences may include unnatural sentences. For example, since majority of sentences that can be collected from the Web are natural sentences, the inclusion of relatively small amount of unnatural sentences is not considered to have a significant impact on the shape of the distribution.

An example of the reference distribution is information indicating a relation between a lexical frequency and a lexical frequency rank. In this case, the predetermined language information is the lexical frequency. The lexical frequency is data acquired by dividing text data into lexical units and counting the frequency of appearance of each lexical unit. The lexical frequency rank is data indicating the rank when the appearance frequencies of the respective lexical units are arranged in descending order.

In this case, the lexical unit is a word or any unit equivalent to a word. The lexical unit is a processing unit referred to as a token in a language model. The appearance frequency is a numerical value acquired by counting the number of times each lexical unit appears in the text data.

Another example of the reference distribution is a part-of-speech distribution. In this case, the predetermined language information is the appearance frequency for each part-of-speech. The part-of-speech distribution is a distribution indicating the ratio of each part-of-speech when a sentence is divided into words and each word is classified into a part-of-speech.

The text acquisition unit 102 acquires evaluation target text. The text acquisition unit 102 may divide the text set in any units to acquire the evaluation target text. The text acquisition unit 102 may receive the text set from the terminal apparatus 20. The text acquisition unit 102 may read the text set stored in the recording medium 515 via the medium I/F 516.

The language information extraction unit 103 extracts the predetermined language information from the evaluation target text acquired by the text acquisition unit 102. When the text acquisition unit 102 acquires a plurality of evaluation target texts, the language information extraction unit 103 extracts language information for each of the plurality of evaluation target texts. The predetermined language information is the same as the language information used when the reference distribution is generated.

The target distribution generation unit 104 generates a target distribution for each evaluation target text based on the language information extracted by the language information extraction unit 103. The target distribution is a distribution similar to the reference distribution. In other words, an example of the target distribution is information indicating a relation between the lexical frequency and the lexical frequency rank. Another example of the target distribution is the part-of-speech distribution.

The reference distribution acquisition unit 105 reads the reference distribution stored in the reference distribution storage unit 101 to acquire the reference distribution.

The evaluation value calculation unit 106 calculates an evaluation value of the evaluation target text based on the target distribution generated by the target distribution generation unit 104 and the reference distribution acquired by the reference distribution acquisition unit 105. An example of the evaluation value is a divergence between the reference distribution and the target distribution. The divergence is a value indicating a difference between the reference distribution and the target distribution.

When the reference distribution and the target distribution are information indicating the relation between the lexical frequency and the lexical frequency rank, the evaluation value calculation unit 106 may normalize the target distribution and the reference distribution and calculate the difference between the normalized target distribution and the normalized reference distribution as the evaluation value. The difference may be, for example, the sum of the absolute values of the differences in the appearance frequency for each rank, or the sum of the squares of the differences in the appearance frequency for each rank.

The result output unit 107 transmits screen data for displaying the result screen to the terminal apparatus 20. The result screen is a screen indicating the evaluation result of the evaluation target text. The screen data is, for example, screen data described in hypertext markup language (HTML) and may include an application described in JavaScript^{®}.

As illustrated in FIG. 3, the terminal apparatus 20 according to the first embodiment includes a text storage unit 201, a text transmission unit 202, and a display control unit 203.

The text storage unit 201 is implemented by using, for example, the HD 504 illustrated in FIG. 2. Reading or writing of the data stored in the HD 504 is performed via, for example, the HDD controller 505.

The text transmission unit 202 and the display control unit 203 are implemented by, for example, processing executed by the CPU 501 according to a program loaded from the HD 504 to the RAM 503 illustrated in FIG. 2.

The text storage unit 201 stores a text set in advance. The text set may be data electronically collected from the Web in advance. Alternatively, the text set may be digitized data from printed documents using optical character recognition (OCR). The text set may be selected from text data satisfying a specific condition according to the type of task to be performed using the language model. The specific condition is, for example, a sentence including a predetermined word or a sentence on a website belonging to a predetermined category.

The text transmission unit 202 transmits a text set read from the text storage unit 201 to the information processing apparatus 10 in response to an operation by the user.

The display control unit 203 displays a screen to be presented to the user on the display 506 based on the screen data received from the information processing apparatus 10. The screen displayed by the display control unit 203 includes the result screen indicating the evaluation result of the evaluation target text.

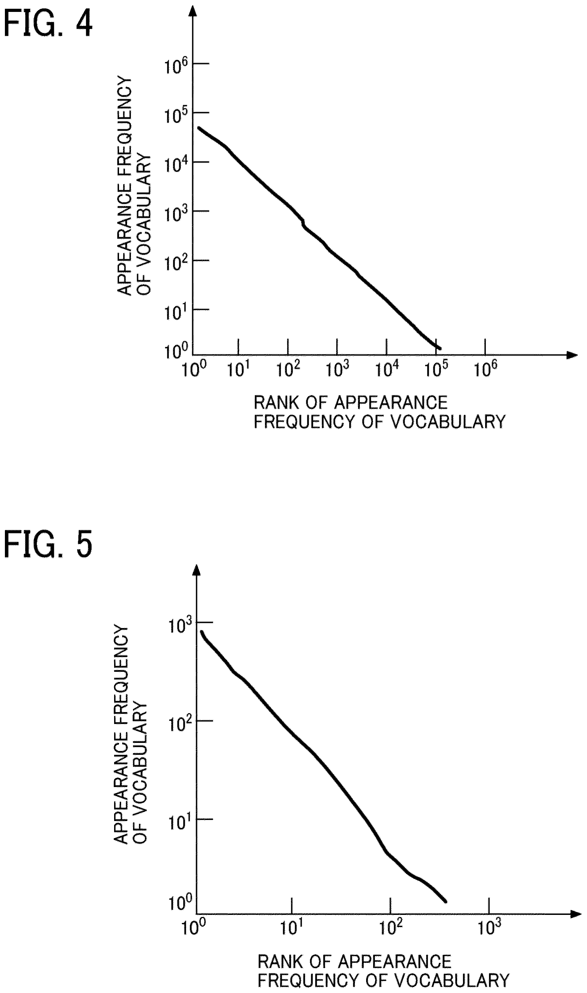

FIG. 4 is a diagram illustrating an example of the reference distribution. The graph illustrated in FIG. 4 is a distribution with the vertical axis as the logarithm of the lexical frequency and the horizontal axis as the logarithm of the lexical frequency rank, and the lexical frequencies are arranged in descending order.

In sufficiently large text data, it is known that the appearance frequency of a lexicon is inversely proportional to the rank of the appearance frequency of the lexicon (Zipf s law). Accordingly, as illustrated in FIG. 4, when the lexical frequency and the lexical frequency rank are plotted on a log-log graph, a straight line descending to the right is acquired.

FIG. 5 is a diagram illustrating an example of the target distribution for the natural sentences. The graph illustrated in FIG. 5 is a distribution with the vertical axis as the logarithm of the lexical frequency and the horizontal axis as the logarithm of the lexical frequency rank, and the lexical frequencies are arranged in descending order, as in FIG. 4.

The target distribution of the lexical frequencies extracted from the natural sentences has the same shape as the reference distribution. As illustrated in FIG. 5, the target distribution for the natural sentences is a straight line descending to the right, as in the reference distribution.

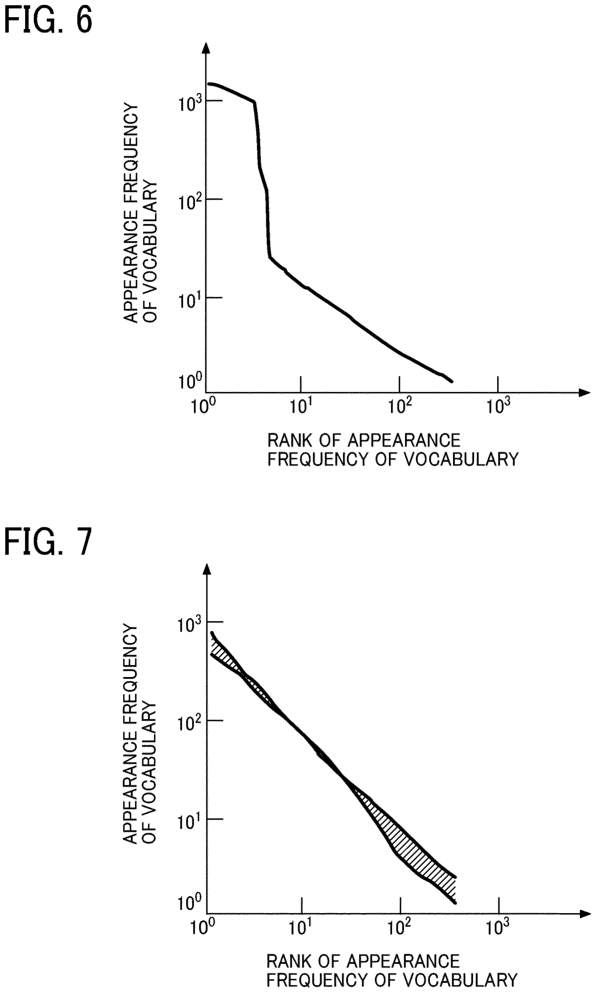

FIG. 6 is a diagram illustrating an example of the target distribution for the unnatural sentences. The graph illustrated in FIG. 6 is a distribution with the vertical axis as the logarithm of the lexical frequency and the horizontal axis as the logarithm of the lexical frequency rank, and the lexical frequencies are arranged in descending order, as in FIG. 4.

The target distribution of the lexical frequency extracted from the unnatural sentences is greatly different from the reference distribution as the unnaturalness is higher. As illustrated in FIG. 6, the target distribution for the unnatural sentences is not linear but has a distorted shape.

FIG. 7 is a diagram illustrating an example of a divergence for natural sentences. Specifically, FIG. 7 is a graph in which the reference distribution illustrated in FIG. 4 and the target distribution illustrated in FIG. 5 are superimposed. In FIG. 7, a normalization process is performed on the reference distribution and the target distribution to match the scales of the reference distribution and the target distribution.

In FIG. 7, a shaded portion is a range of the difference between the reference distribution and the target distribution. The divergence may be an area of a shaded portion or a sum of squares of differences for each lexical frequency rank. As illustrated in FIG. 7, the area of the shaded portion is relatively small, and the divergence of the natural sentences is a small value.

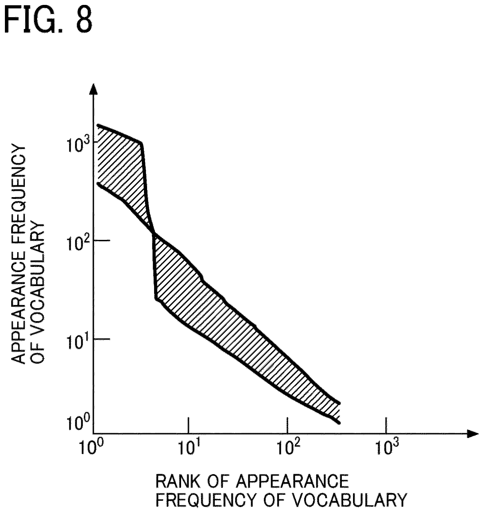

FIG. 8 is a diagram illustrating an example of a divergence for the unnatural sentences. Specifically, FIG. 8 is a graph in which the reference distribution illustrated in FIG. 4 and the target distribution illustrated in FIG. 6 are superimposed. In FIG. 8, the normalization process is performed on the reference distribution and the target distribution, as in FIG. 7.

In FIG. 8, a shaded portion is a range of the difference between the reference distribution and the target distribution. As illustrated in FIG. 8, since the area of the shaded portion is relatively large, the divergence of the unnatural sentences has a large value.

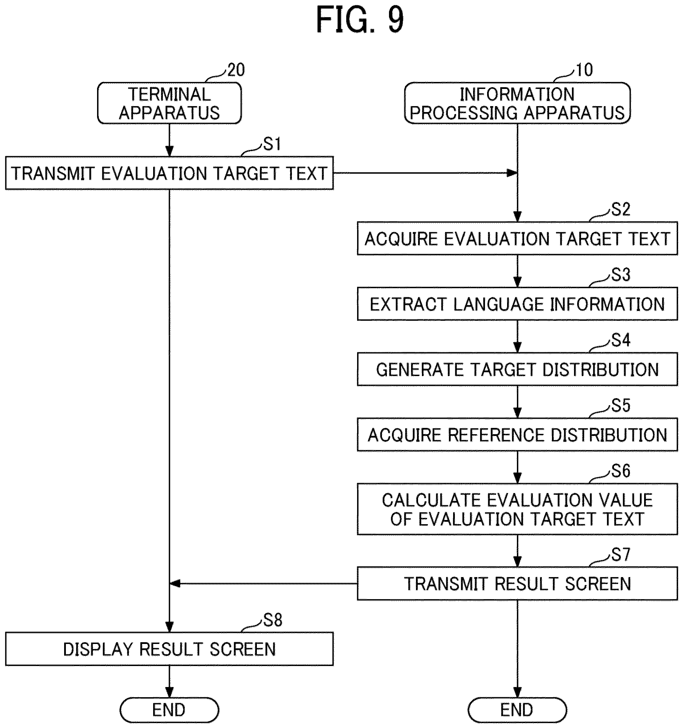

A description is given below of an information processing method executed by the information processing system 1000 according to the first embodiment with reference to FIG 9. FIG. 9 is a sequence diagram illustrating the information processing method according to the first embodiment of the present disclosure.

In step S1, the user of the information processing system 1000 performs an operation for evaluating the text data. The operation for evaluating the text data may be, for example, an operation of selecting a menu for evaluating the text data on a menu screen displayed on the display 506 of the terminal apparatus 20.

When the text transmission unit 202 of the terminal apparatus 20 receives the operation for evaluating text data, the text transmission unit 202 reads a text set from the text storage unit 201 in response to the operation. Subsequently, the text transmission unit 202 transmits the read text set to the information processing apparatus 10.

In step S2, the text acquisition unit 102 of the information processing apparatus 10 receives the text set from the terminal apparatus 20. Subsequently, the text acquisition unit 102 acquires one or more evaluation target texts from the received text set. The text acquisition unit 102 may acquire all evaluation target texts included in the text set or may acquire some evaluation target texts. Then, the text acquisition unit 102 transmits the acquired evaluation target text to the language information extraction unit 103.

In step S3, the language information extraction unit 103 of the information processing apparatus 10 receives the evaluation target text from the text acquisition unit 102. Subsequently, the language information extraction unit 103 extracts the predetermined language information from the evaluation target text. Then, the language information extraction unit 103 transmits the predetermined language information extracted from the evaluation target text to the target distribution generation unit 104.

Specifically, the language information extraction unit 103 extracts the language information as follows. The following description is an example and assumes that the lexical frequency is extracted. The language information extraction unit 103 divides the evaluation target text into lexical units. Subsequently, the language information extraction unit 103 calculates the appearance frequency of each lexical unit in the evaluation target text. When the text acquisition unit 102 acquires a plurality of evaluation target texts, the language information extraction unit 103 extracts the lexical frequency for each of the plurality of evaluation target texts.

In step S4, the target distribution generation unit 104 of the information processing apparatus 10 receives the language information of the evaluation target text from the language information extraction unit 103. Subsequently, the target distribution generation unit 104 generates a target distribution of the evaluation target text based on the language information of the evaluation target text. Specifically, the target distribution generation unit 104 arranges the appearance frequencies of the respective lexical units extracted in step S3 in descending order. Then, the target distribution generation unit 104 transmits the target distribution of the evaluation target text to the evaluation value calculation unit 106.

In step S5, the reference distribution acquisition unit 105 of the information processing apparatus 10 reads the reference distribution from the reference distribution storage unit 101. Subsequently, the reference distribution acquisition unit 105 transmits the read reference distribution to the evaluation value calculation unit 106.

In step S6, the evaluation value calculation unit 106 of the information processing apparatus 10 receives the target distribution of the evaluation target text from the target distribution generation unit 104. The evaluation value calculation unit 106 further receives the reference distribution from the reference distribution acquisition unit 105. Subsequently, the evaluation value calculation unit 106 calculates the evaluation value of the evaluation target text based on the reference distribution and the target distribution. Then, the evaluation value calculation unit 106 transmits the evaluation value of the evaluation target text to the result output unit 107.

Specifically, the evaluation value calculation unit 106 calculates the evaluation value of the evaluation target text as follows. The evaluation value calculation unit 106 normalizes the reference distribution. The evaluation value calculation unit 106 also normalizes the target distribution. Subsequently, the evaluation value calculation unit 106 calculates the difference between the normalized target distribution and the normalized reference distribution. Thus, the evaluation value calculation unit 106 can acquire the evaluation value of the evaluation target text.

In step S7, the result output unit 107 of the information processing apparatus 10 receives the evaluation value of the evaluation target text from the evaluation value calculation unit 106. Subsequently, the result output unit 107 generates screen data for displaying a result screen. Then, the result output unit 107 transmits the generated screen data to the terminal apparatus 20.

When the result output unit 107 generates the screen data, the result output unit 107 embeds the evaluation result of the evaluation target text in the screen data. The result output unit 107 may embed the evaluation value in the screen data as the evaluation result. Alternatively, the result output unit 107 may embed a score obtained by processing the evaluation value in the screen data as the evaluation result.

In step S8, the display control unit 203 of the terminal apparatus 20 receives the screen data for displaying the result screen from the information processing apparatus 10. Subsequently, the display control unit 203 displays the result screen on the display 506 based on the received screen data.

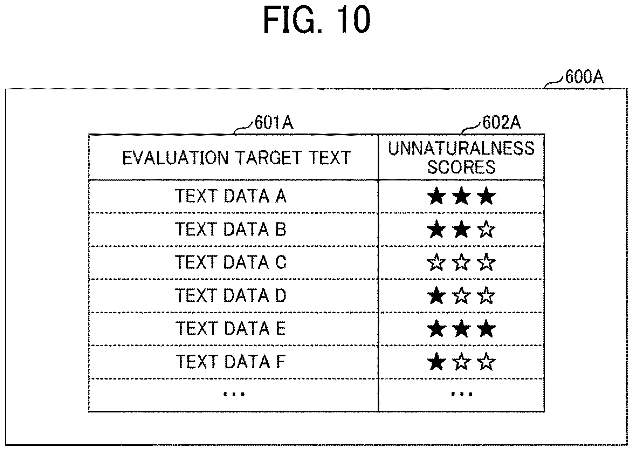

A description is given below of the result screen in the first embodiment with reference to FIG. 10. FIG. 10 is a screen image illustrating a result screen 600A according to the first embodiment of the present disclosure.

As illustrated in FIG. 10, the result screen 600A includes a text display field 601A and a score display field 602A.

The text display field 601A displays information indicating the evaluation target text. The information indicating the evaluation target text may be, for example, a file name, a file path, a serial number of the text, or a predetermined character from the beginning of the text.

The score display field 602A displays the evaluation result of each evaluation target text. The evaluation result may be the evaluation value or a score acquired by processing the evaluation value. The score display field 602A illustrated in FIG. 10 displays unnaturalness scores obtained by classifying unnaturalness into four levels (zero to three black stars). The unnaturalness score indicates that the sentence is more unnatural as the number of black stars increases, for example.

The score is not limited to the above, and the numerical value range that scores can take and the display manner can be freely designed. For example, the magnitude of the unnaturalness score may be reversed to display a "naturalness score" indicating the more natural sentence as the value increases.

As described above, the information processing apparatus 10 according to the present embodiment calculates the evaluation value indicating the difference between the reference distribution indicating the tendency of the predetermined language information and the target distribution regarding the language information extracted from text data. The information processing apparatus 10 can perform a lightweight calculation of comparing distributions of language information to evaluate text data. According to the present embodiment, unnaturalness of text data can be evaluated at high speed.

The language information in the present embodiment may be information indicating a relation between the appearance frequency and the rank of the appearance frequency for each lexicon. It is known that the appearance frequency of each lexicon is inversely proportional to the rank of the appearance frequency. According to the present embodiment, unnaturalness of the text data can be evaluated with high accuracy.

The information processing apparatus 10 according to the present embodiment may calculate the difference between the normalized target distribution and the normalized reference distribution as the evaluation value. When the scales of the target distribution and the reference distribution match, the value that the difference can take can be reduced to a small value. According to the present embodiment, unnaturalness of the text data can be evaluated at high speed and with high accuracy.

The information processing apparatus 10 according to the present embodiment may acquire a set of text data and calculate an evaluation value for each text data included in the set of text data. According to the present embodiment, even if there are many evaluation target texts, the unnaturalness of each evaluation target text can be collectively evaluated at high speed.

### First Modification

In the first embodiment, the configuration in which text data is evaluated using a reference distribution prepared in advance has been described. In a first modification of the first embodiment, a description is given below of a configuration in which the reference distribution is generated based on the reference text prepared in advance.

The following description of the information processing system 1000 according to the first modification focuses on the differences from the first embodiment.

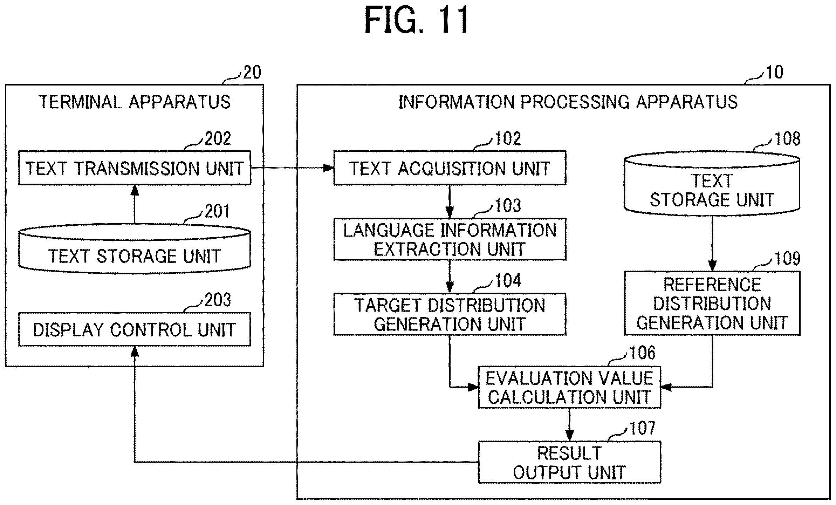

An example of a functional configuration of the information processing system 1000 according to the first modification is described below with reference to FIG. 11. FIG. 11 is a block diagram illustrating the functional configuration of the information processing system 1000 according to the first modification of the first embodiment of the present disclosure.

As illustrated in FIG. 11, the information processing apparatus 10 according to the first modification includes the text acquisition unit 102, the language information extraction unit 103, the target distribution generation unit 104, the evaluation value calculation unit 106, the result output unit 107, a text storage unit 108, and a reference distribution generation unit 109. In other words, the information processing apparatus 10 according to the first modification is different from the first embodiment in that the information processing apparatus 10 according to the first modification does not include the reference distribution storage unit 101 and the reference distribution acquisition unit 105, and further includes the text storage unit 108 and the reference distribution generation unit 109.

The text storage unit 108 stores text data (also referred to as "reference text" in the following description) for generating the reference distribution in advance. The reference text is a set of a large number of sentences collected in advance. The reference text may include data electronically collected from the Web in advance. Alternatively, the reference text may include digitized data from printed documents using OCR.

The reference distribution generation unit 109 generates the reference distribution based on the reference text read from the text storage unit 108. Specifically, the reference distribution generation unit 109 generates the reference distribution as follows. The reference distribution generation unit 109 divides the reference text into lexical units. Subsequently, the reference distribution generation unit 109 calculates the appearance frequency of each lexical unit in the reference text. Subsequently, the reference distribution generation unit 109 arranges the appearance frequencies of the respective lexical units in descending order.

The evaluation value calculation unit 106 of the present embodiment calculates the evaluation value of the evaluation target text based on the target distribution generated by the target distribution generation unit 104 and the reference distribution generated by the reference distribution generation unit 109. The evaluation value and the calculation method of the evaluation value are the same as those in the first embodiment.

As described above, the information processing apparatus 10 according to the present modification generates the distribution of the language information extracted from the reference text as the reference distribution. According to the present modification, the unnaturalness of text data can be evaluated using a reference distribution generated based on any reference text.

### Second Modification

In the first modification, the configuration in which the reference distribution is generated based on the reference text prepared in advance has been described. In a second modification, a description is given below of a configuration in which the reference distribution is generated using a text set to be evaluated as the reference text.

The following description of the information processing system 1000 according to the second modification focuses on the differences from the first modification.

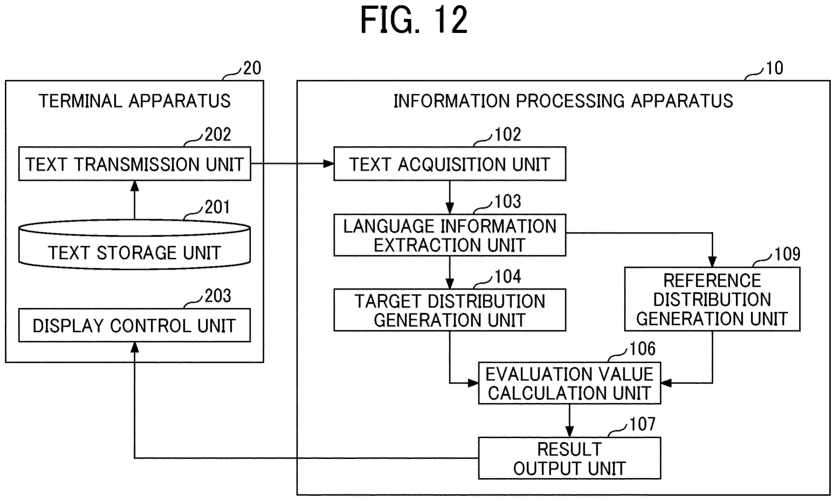

An example of a functional configuration of the information processing system 1000 according to the second modification is described with reference to FIG. 12. FIG. 12 is a block diagram illustrating a functional configuration of the information processing system 1000 according to the second modification of the first embodiment of the present disclosure.

As illustrated in FIG. 12, the information processing apparatus 10 according to the second modification includes the text acquisition unit 102, the language information extraction unit 103, the target distribution generation unit 104, the evaluation value calculation unit 106, the result output unit 107, and the reference distribution generation unit 109. In other words, the information processing apparatus 10 according to the second modification is different from the first modification in that the information processing apparatus 10 according to the second modification does not include the text storage unit 108.

The reference distribution generation unit 109 according to the present embodiment generates a reference distribution for a plurality of evaluation target texts based on the language information extracted by the language information extraction unit 103. In other words, the reference distribution generation unit 109 uses the text set from which the evaluation target texts are acquired as the reference text to generate the reference distribution. When the language information is the lexical frequency, the reference distribution generation unit 109 calculates the total number of appearance frequencies for each lexical unit extracted from each evaluation target text and arranges the total number of the appearance frequencies for each lexical unit in descending order.

As described above, the information processing apparatus 10 according to the second modification generates the distribution of the language information extracted from the set of text data as the reference distribution. According to the present modification, it is not necessary to collect text data for generating a reference distribution separately from text data to be evaluated.

### Second Embodiment

In the first embodiment, the configuration in which the unnaturalness score acquired by evaluating the unnaturalness of the text data to be evaluated is output has been described. In a second embodiment of the present disclosure, a description is given below of a configuration in which the unnatural sentence is deleted from the set of text data based on the evaluation result acquired by evaluating unnaturalness of the text data. In other words, in the second embodiment, the information processing system 1000 that performs cleansing processing on the set of text data is described.

The following description of the information processing system 1000 according to the second embodiment focuses on the differences from the first embodiment.

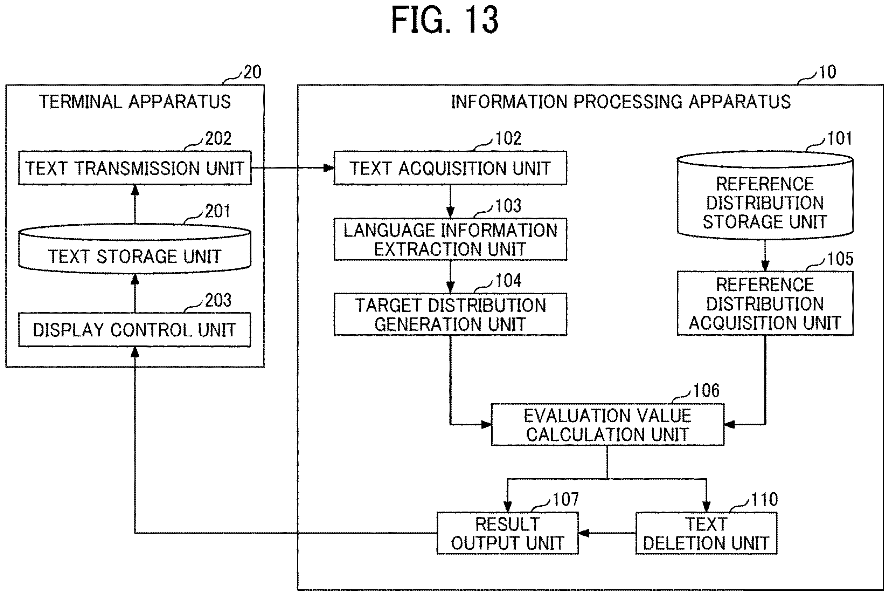

An example of a functional configuration of the information processing system 1000 according to the second embodiment is described with reference to FIG. 13. FIG. 13 is a block diagram illustrating a functional configuration of the information processing system 1000 according to the second embodiment of the present disclosure.

As illustrated in FIG. 13, the information processing apparatus 10 according to the second embodiment includes the reference distribution storage unit 101, the text acquisition unit 102, the language information extraction unit 103, the target distribution generation unit 104, the reference distribution acquisition unit 105, the evaluation value calculation unit 106, the result output unit 107, and a text deletion unit 110. In other words, the information processing apparatus 10 according to the second embodiment is different from the first embodiment in that the information processing apparatus 10 according to the second embodiment further includes the text deletion unit 110.

The text deletion unit 110 deletes a part of the evaluation target texts from the plurality of evaluation target texts acquired by the text acquisition unit 102 based on the evaluation value calculated by the evaluation value calculation unit 106. The text deletion unit 110 outputs information (also referred to as a "deletion flag" in the following description) indicating whether to delete the evaluation target text for each evaluation target text.

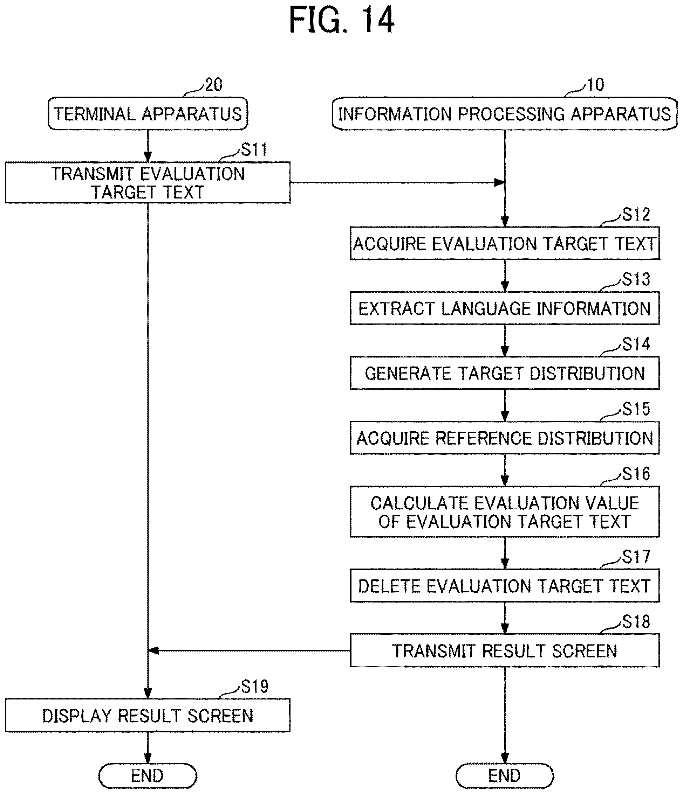

A description is given below of an information processing method executed by the information processing system 1000 according to the second embodiment with reference to FIG. 14. FIG. 14 is a sequence diagram illustrating the information processing method according to the second embodiment of the present disclosure.

The processing from step S11 to step S16 is the same as the processing from step S1 to step S6 in the first embodiment, respectively (see FIG. 9). However, in step S16, the evaluation value calculation unit 106 transmits the evaluation value of the evaluation target text to the result output unit 107 and the text deletion unit 110.

In step S17, the text deletion unit 110 of the information processing apparatus 10 receives the evaluation value of the evaluation target text from the evaluation value calculation unit 106. Subsequently, the text deletion unit 110 deletes a part of the evaluation target texts from the plurality of evaluation target texts acquired in step S12 based on the evaluation values of the evaluation target texts. Then, the text deletion unit 110 transmits the deletion flags indicating whether each evaluation target text is to be deleted to the result output unit 107.

For example, the text deletion unit 110 may compare the evaluation value of each evaluation target text with a predetermined threshold value and delete the evaluation target text having an evaluation value equal to or larger than the threshold value. The reference for deleting the evaluation target text is not limited to the above, and the evaluation target text may be deleted based on any reference.

For another example, the text deletion unit 110 may compare the unnaturalness score acquired by processing the evaluation value with the predetermined threshold value, and delete the evaluation target text having the unnaturalness score equal to or larger than the threshold value. For another example, the text deletion unit 110 may arrange the evaluation target texts in descending order of the evaluation value and delete a predetermined number of evaluation target texts from the beginning of the arranged evaluation target texts. For another example, the text deletion unit 110 may arrange the evaluation target texts in descending order of the evaluation value and delete the evaluation target texts that fall within a predetermined ratio from the beginning of the arranged evaluation target texts.

In step S 18, the result output unit 107 of the information processing apparatus 10 receives the evaluation value of the evaluation target text from the evaluation value calculation unit 106. Subsequently, the result output unit 107 receives the deletion flags from the text deletion unit 110. Subsequently, the result output unit 107 generates screen data for displaying the result screen. When the result output unit 107 generates the screen data, the result output unit 107 embeds the evaluation result including the deletion flags in the screen data. Then, the result output unit 107 transmits the generated screen data to the terminal apparatus 20.

In step S19, the display control unit 203 of the terminal apparatus 20 receives the screen data for displaying the result screen from the information processing apparatus 10. Subsequently, the display control unit 203 deletes a part of the evaluation target texts from the text set stored in the text storage unit 201 based on the deletion flags included in the screen data. Then, the display control unit 203 displays the result screen on the display 506 based on the received screen data.

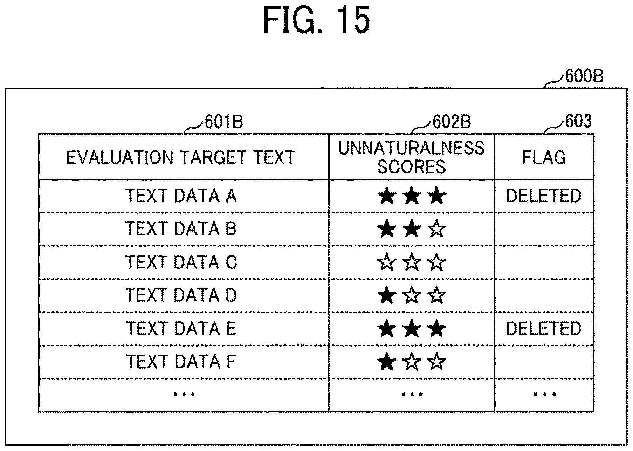

A description is given below of the result screen in the second embodiment with reference to FIG. 15. FIG. 15 is a screen image illustrating a result screen 600B according to the second embodiment of the present disclosure.

As illustrated in FIG. 15, the result screen 600B in the second embodiment includes a text display field 601B, a score display field 602B, and a flag display field 603. In other words, the result screen 600B according to the second embodiment is different from the first embodiment in that the result screen 600B according to the second embodiment further includes the flag display field 603.

The flag display field 603 displays whether each evaluation target text is to be deleted. Although only the evaluation target text to be deleted is indicated to be deleted in the flag display field 603 illustrated in FIG. 15, the display manner of the deletion flags is not limited to this. For example, the evaluation target text to be deleted may be grayed out without providing the flag display field 603 in the result screen 600B. For another example, the flag display field 603 may not be provided on the result screen 600B, and the evaluation target text to be deleted may not be displayed. In other words, only the evaluation target text not to be deleted may be displayed on the result screen 600B.

As described above, the information processing apparatus 10 according to the present embodiment deletes text data having a high evaluation value from the set of text data. According to the present embodiment, the cleansing processing for deleting unnatural text data can be executed at high speed.

### Third Embodiment

In the first embodiment, the configuration in which the unnaturalness score acquired by evaluating the unnaturalness of the text data to be evaluated is output has been described. In a third embodiment of the present disclosure, a configuration in which the set of text data is divided based on the evaluation result acquired by evaluating unnaturalness of the text data is described below.

The following description of the information processing system 1000 according to the third embodiment focuses on the differences from the first embodiment.

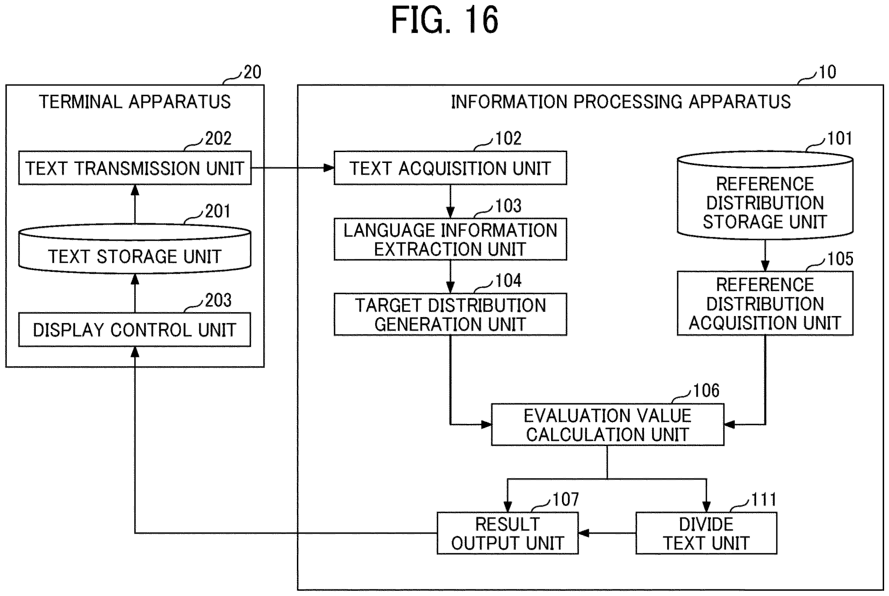

An example of a functional configuration of the information processing system 1000 according to the third exemplary embodiment is described below with reference to FIG. 16. FIG. 16 is a block diagram illustrating the functional configuration of the information processing system 1000 according to the third embodiment of the present disclosure.

As illustrated in FIG. 16, the information processing apparatus 10 according to the third embodiment includes the reference distribution storage unit 101, the text acquisition unit 102, the language information extraction unit 103, the target distribution generation unit 104, the reference distribution acquisition unit 105, the evaluation value calculation unit 106, the result output unit 107, and a text division unit 111. In other words, the information processing apparatus 10 according to the third embodiment is different from the first embodiment in that the information processing apparatus 10 according to the first embodiment further includes the text division unit 111.

The text division unit 111 divides the evaluation target texts acquired by the text acquisition unit 102 into a plurality of subsets based on the evaluation values calculated by the evaluation value calculation unit 106. The text division unit 111 outputs, for each evaluation target text, information indicating a subset to which the evaluation target text belongs (also referred to as "division information").

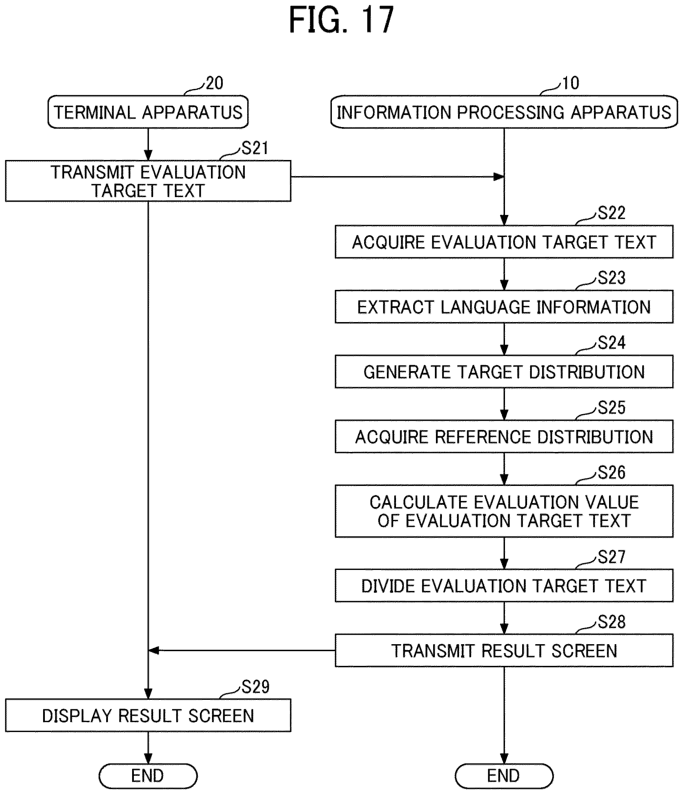

A description is given below of an information processing method executed by the information processing system 1000 according to the third embodiment with reference to FIG. 17. FIG. 17 is a sequence diagram illustrating the information processing method according to the third embodiment of the present disclosure.

The processing from step S21 to step S26 is the same as the processing from step S1 to step S6 in the first embodiment, respectively (see FIG. 9). However, in step S26, the evaluation value calculation unit 106 transmits the evaluation value of the evaluation target text to the result output unit 107 and the text division unit 111.

In step S27, the text division unit 111 of the information processing apparatus 10 receives the evaluation value of the evaluation target text from the evaluation value calculation unit 106. Subsequently, the text division unit 111 divides the evaluation target texts acquired in step S22 into the plurality of subsets based on the evaluation values of the evaluation target texts. Then, the text division unit 111 transmits division information indicating the subset to which each evaluation target text belongs to the result output unit 107.

For example, the text division unit 111 may compare the evaluation value of each evaluation target text with each of the upper limit value and the lower limit value determined for each of the plurality of subsets, and then classify the evaluation target text into a subset having an evaluation value between the upper limit value and the lower limit value. The reference for dividing the evaluation target text is not limited to the above, and the evaluation target text may be divided by any reference.

For example, the text division unit 111 may process the evaluation value of each evaluation target text into the unnaturalness score, and then divide the evaluation target text into subsets corresponding to the unnaturalness score (for example, subset A corresponds to unnaturalness score = 1, subset B corresponds to unnaturalness score = 2, and so on). For another example, the text division unit 111 may arrange the evaluation target texts in ascending or descending order of the evaluation value and divide the evaluation target texts according to the ratio from the top (for example, the top 25% is the subset A, the top 25% to 50% is the subset B, and so on).

In step S28, the result output unit 107 of the information processing apparatus 10 receives the evaluation value of the evaluation target text from the evaluation value calculation unit 106. Subsequently, the result output unit 107 receives the division information from the text division unit 111. Subsequently, the result output unit 107 generates screen data for displaying the result screen. When the result output unit 107 generates the screen data, the result output unit 107 embeds the evaluation result including the division information in the screen data. Then, the result output unit 107 transmits the generated screen data to the terminal apparatus 20.

In step S29, the display control unit 203 of the terminal apparatus 20 receives the screen data for displaying the result screen from the information processing apparatus 10. Subsequently, the display control unit 203 divides the text set stored in the text storage unit 201 into subsets based on the division information included in the screen data. Then, the display control unit 203 displays the result screen on the display 506 based on the received screen data.

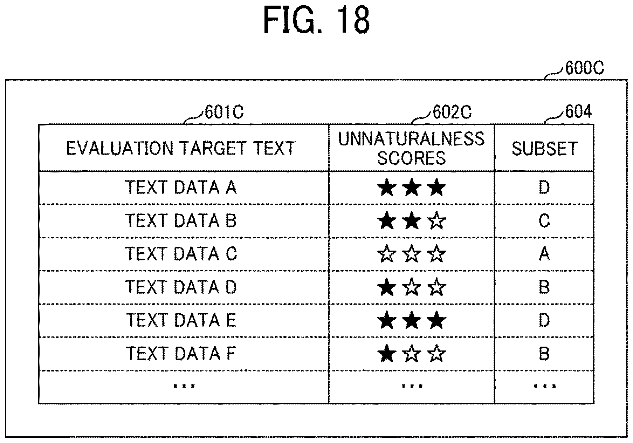

A description is given below of the result screen in the third embodiment with reference to FIG. 18. FIG. 18 is a screen image illustrating a result screen 600C according to the third embodiment of the present disclosure.

As illustrated in FIG. 18, the result screen 600C in the third embodiment includes a text display field 601C, a score display field 602C, and a division display field 604. In other words, the result screen 600C according to the third embodiment is different from the first embodiment in that the result screen 600C according to the third embodiment further includes the division display field 604.

The division display field 604 displays information indicating a subset to which each evaluation target text belongs. In the division display field 604 illustrated in FIG. 18, information acquired by dividing each evaluation target text into subsets A to D corresponding to unnaturalness scores is displayed. The display manner of the division information is not limited to this. For example, the result screen 600C may not include the division display field 604, and at least one of the character color and the background color may be displayed in a color corresponding to the subset to which the evaluation target text belongs.

As described above, the information processing apparatus 10 according to the present embodiment may divide the set of text data based on the evaluation values. When the set of text data is used after division, text data can be selected to use for learning of a language model according to the degree of unnaturalness or the amount of data. According to the present embodiment, the process of flexibly enabling the selection of the desired text data can be executed at high speed.

Each of the functions of the embodiments described above may be implemented by one or more processing circuits or circuitry. The "processing circuit or circuitry" in the present disclosure includes a programmed processor to execute functions by software, such as a processor implemented by an electronic circuit, and a device such as an application-specific integrated circuit (ASIC) that is designed to execute the above functions, a digital signal processor (DSP), a field-programmable gate array (FPGA), and circuit modules arranged to perform the recited functions.

The group of apparatuses or devices according to the embodiments described above are merely one example of multiple computing environments that implement the embodiments disclosed herein. In some embodiments, the information processing apparatus 10 includes multiple computing devices, such as a server cluster. The multiple computing devices are configured to communicate with one another through any type of communication link, including a network, a shared memory, etc., and perform the processes disclosed herein.

A description is given below of some aspects of the present disclosure.

### Aspect 1

An information processing apparatus includes a reference distribution acquisition unit, a target distribution generation unit, and an evaluation value calculation unit. The reference distribution acquisition unit acquires a reference distribution indicating a tendency of predetermined language information. The target distribution generation unit generates a target distribution related to the language information extracted from text data. The evaluation value calculation unit calculates an evaluation value indicating a difference between the reference distribution and the target distribution.

### Aspect 2

In the information processing apparatus according to Aspect 1, the language information is information indicating a relation between an appearance frequency of each lexicon and a rank of the appearance frequency of each lexicon.

### Aspect 3

In the information processing apparatus according to Aspect 2, the evaluation value calculation unit normalizes each of the target distribution and the reference distribution. The evaluation value calculation unit calculates a difference between the normalized target distribution and the normalized reference distribution as the evaluation value.

### Aspect 4

The information processing apparatus according to any one of Aspects 1 to 3, further includes a text acquisition unit that acquires a set of text data. The evaluation value calculation unit calculates the evaluation value for each of the text data included in the set of text data.

### Aspect 5

In the information processing apparatus according to Aspect 4, the reference distribution acquisition unit generates a distribution related to the language information extracted from the set of text data as the reference distribution.

### Aspect 6

The information processing apparatus according to Aspect 4 or 5, further include a text deletion unit that deletes the text data having a high evaluation value from the set of text data.

### Aspect 7

The information processing apparatus according to Aspect 4 or 5, further includes a text division unit that divides the set of text data based on the evaluation value.

### Aspect 8

An information processing system includes an information processing terminal operated by a user and an information processing apparatus. The information processing terminal and the information processing apparatus can communicate with each other via a network. The information processing apparatus includes a reference distribution acquisition unit, a target distribution generation unit, an evaluation value calculation unit, and a result output unit. The reference distribution acquisition unit acquires a reference distribution indicating a tendency of predetermined language information. The target distribution generation unit generates a target distribution related to the language information extracted from text data. The evaluation value calculation unit calculates an evaluation value indicating a difference between the reference distribution and the target distribution. The result output unit transmits screen data for indicating an evaluation result of the text data to the information processing terminal. The information processing terminal includes a text transmission unit and a display control unit. The text transmission unit transmits the text data to the information processing apparatus. The display control unit displays a screen for indicating the evaluation result of the text data based on the screen data received from the information processing apparatus.

### Aspect 9

An information processing method executed by a computer includes: acquiring a reference distribution indicating a tendency of predetermined language information; generating a target distribution related to the language information extracted from text data; and calculating an evaluation value indicating a difference between the reference distribution and the target distribution.

### Aspect 10

A program causes a computer to execute a process. The process includes: acquiring a reference distribution indicating a tendency of predetermined language information; generating a target distribution related to the language information extracted from text data; and calculating an evaluation value indicating a difference between the reference distribution and the target distribution.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus (10) comprising:
a reference distribution acquisition unit (105) configured to acquire a reference distribution indicating a tendency of language information, the language information being extracted from text data;
a target distribution generation unit (104) configured to generate a target distribution related to the language information; and
an evaluation value calculation unit (106) configured to calculate an evaluation value indicating a difference between the reference distribution and the target distribution.

2. The information processing apparatus (10) according to claim 1,
wherein the language information indicates a relation between an appearance frequency of each lexicon and a rank of the appearance frequency of each lexicon.

3. The information processing apparatus (10) according to claim 2,
wherein the evaluation value calculation unit (106) is configured to normalize each of the target distribution and the reference distribution, and calculate a difference between the normalized target distribution and the normalized reference distribution as the evaluation value.

4. The information processing apparatus (10) according to any one of claims 1 to 3, wherein the text data is a set of text data,
a text acquisition unit (102) configured to acquire the set of text data, and
wherein the evaluation value calculation unit (106) is configured to calculate the evaluation value for each of the text data included in the set of text data.

5. The information processing apparatus (10) according to claim 4,
wherein the reference distribution acquisition unit (105) is configured to generate a distribution related to the language information extracted from the set of text data as the reference distribution.

6. The information processing apparatus (10) according to claims 4 or 5, further comprising:
a text deletion unit (110) configured to delete the text data having an evaluation value higher than a predetermined value from the set of text data.

7. The information processing apparatus (10) according to claims 4 or 5, further comprising:
a text division unit (111) configured to divide the set of text data based on the evaluation value.

8. An information processing system (1000) comprising:
an information processing terminal (20) operated by a user:
an information processing apparatus (10) configured to communicate with the information processing terminal (20) via a network,
the information processing apparatus (10) including:
a reference distribution acquisition unit (105) configured to acquire a reference distribution indicating a tendency of language information, the language information being extracted from text data;
a target distribution generation unit (104) configured to generate a target distribution related to the language information;
an evaluation value calculation unit (106) configured to calculate an evaluation value indicating a difference between the reference distribution and the target distribution; and
a result output unit (107) configured to transmit screen data for presenting an evaluation result of the text data to the information processing terminal (20), and
the information processing terminal (20) including;
a text transmission unit configured to transmit the text data to the information processing apparatus (10); and
a display control unit (203) configured to display a screen including the evaluation result of the text data based on the screen data received from the information processing apparatus (10).

9. An information processing method executed by a computer, the method comprising:
acquiring (S5, S15, S25) a reference distribution indicating a tendency of language information, the language information being extracted from text data;
generating (S4, S14, S24) a target distribution related to the language information; and
calculating (S6, S16, S26) an evaluation value indicating a difference between the reference distribution and the target distribution.

10. A carrier medium carrying computer-readable program code that causes a computer system to perform a method comprising:
acquiring (S5, S15, S25) a reference distribution indicating a tendency of language information, the language information being extracted from text data;
generating (S4, S14, S24) a target distribution related to the language information; and
calculating (S6, S16, S26) an evaluation value indicating a difference between the reference distribution and the target distribution.
